# EUROPEAN PATENT APPLICATION

(11) **EP 4 650 768 A1**
(43) Date of publication of application: **19.11.2025**
(21) Application number: 25176190.4
(22) Date of filing: 13.05.2025
(51) Int. Cl.: G01N 29/04, G01N 29/12, G01N 29/44

(54) **METHOD FOR INSPECTING A POWERPLANT COMPONENT USING AN INSPECTION SCOPE**

(30) Priority: 13.05.2024 US 202418662506
(71) Applicant: RTX Corporation, Farmington, CT 06032 (US)
(72) Inventor: FREIBERG, Douglas P., South Glastonbury, 06073 (US); SIDWELL, Carroll V., Wethersfield, 06109 (US); CHAUDHRY, Zaffir A., Portland, 06480 (US)
(74) Representative: Dehns

(57) **Abstract**

A method of inspecting a metallic gas turbine component (20) is provided that includes: (a) providing a baseline inspection response signal using a transducer (48) to perform an initial inspection of a component (20) that includes transmitting a first initial signal into the component (20) and sensing the component (20) for a second initial signal produced by the first initial signal being transmitted, wherein the baseline inspection response signal is representative of the second initial signal and is unique to the component (20); (b) using the transducer (48) to inspect the component (20), the inspection including transmitting a first signal into the component (20) and sensing the component (20) for a second signal produced by the first signal being transmitted into the component (20), and producing an inspection response signal representative of the second signal; and (c) evaluating the inspection response signal to determine the presence or absence of a defect using the baseline response signal.

## Description

### TECHNICAL FIELD

This disclosure relates generally to inspection and, more particularly, to non-destructive inspection for internal defects.

### BACKGROUND INFORMATION

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, a method of inspecting a component within a gas turbine engine is provided, the component comprising a solid metallic material, wherein the method includes: (a) providing a baseline inspection response signal that is produced by using a transducer to perform an initial inspection of a component, the initial inspection including transmitting a first initial signal into the component and sensing the component for a second initial signal produced as a result of the first initial signal being transmitted into the component, wherein the baseline inspection response signal is representative of the second initial signal and is unique to the component; (b) using the transducer to inspect the component, the inspection including transmitting a first signal into the component and sensing the component for a second signal produced as a result of the first signal being transmitted into the component, and producing an inspection response signal representative of the second signal; and (c) evaluating the inspection response signal to determine the presence or absence of a defect using the baseline response signal.

In any of the aspects or embodiments described above and herein, the inspection response signal may be evaluated to determine a difference with the baseline response signal.

In any of the aspects or embodiments described above and herein, the inspection response signal may be evaluated by comparison with the baseline response signal.

In any of the aspects or embodiments described above and herein, the inspection response signal may be evaluated by comparison with the baseline response signal to determine a frequency shift of one or more signal peaks.

In any of the aspects or embodiments described above and herein, the first signal and the second signal may be ultrasonic signals.

In any of the aspects or embodiments described above and herein, the baseline response signal may be indicative of the component being free of defects.

In any of the aspects or embodiments described above and herein, the component may be a rotor disk.

In any of the aspects or embodiments described above and herein, the method may include repeating steps (b) and (c) after a trigger event that occurs during operation of the gas turbine engine.

In any of the aspects or embodiments described above and herein, the method may include repeating steps (b) and (c) periodically.

In any of the aspects or embodiments described above and herein, the method may include repeating steps (b) and (c) after the gas turbine engine has performed a predetermined number of flight cycles.

In any of the aspects or embodiments described above and herein, the method may include determining trend data using a plurality of the inspection response data produced periodically.

In any of the aspects or embodiments described above and herein, the transducer may be attached to the component, and an inspection scope in contact with the component and independent of the transducer may be used to communicate with the transducer.

According to an aspect of the present disclosure, an inspection system for a component within a gas turbine engine is provided. The component comprises a solid metallic material. The system includes a transducer and a controller. The transducer has a signal transmitter and a signal receiver. The controller is in communication with the signal transmitter, the signal receiver, and a non-transitory memory storing instructions. The instructions when executed cause the controller to: (a) control the signal transmitter to transmit a first signal into the component comprising the solid metallic material; (b) control the signal receiver to sense the component for a second signal produced as a result of the first signal being transmitted into the component, and to produce a response signal; (c) process the response signal received from the signal receiver to produce an inspection response signal; and (d) evaluate the inspection response signal to determine the presence or absence of a defect, using a stored baseline response signal unique to the component produced by using the transducer to perform an initial inspection of the component by transmitting an initial first signal into the component and sense the component for an initial second signal produced as a result of the initial first signal being transmitted into the component, and produce the baseline response signal unique to the component using the initial second signal.

In any of the aspects or embodiments described above and herein, the instructions when executed may cause the controller to evaluate the inspection response signal by determining a difference with the baseline response signal.

In any of the aspects or embodiments described above and herein, the instructions when executed may cause the controller to evaluate the inspection response signal by comparison with the baseline response signal.

In any of the aspects or embodiments described above and herein, the instructions when executed may cause the controller to perform (a) - (d) after a trigger event that occurs during operation of the gas turbine engine.

In any of the aspects or embodiments described above and herein, the instructions when executed may cause the controller to perform (a) - (d) periodically.

In any of the aspects or embodiments described above and herein, the instructions when executed may cause the controller to determine trend data using a plurality of the inspection response data produced periodically.

In any of the aspects or embodiments described above and herein, the instructions when executed may cause the controller to perform (a) - (d) after the gas turbine engine has performed a predetermined number of flight cycles.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of an airplane having a powerplant with which the present disclosure may be used.
FIG. 2 is a diagrammatic illustration of a gas turbine engine with which the present disclosure may be used.
FIG. 3 is a diagrammatic view of an embodiment of a present disclosure inspection scope engaged with a component.
FIG. 4 is a diagrammatic view of an embodiment of a present disclosure inspection scope engaged with a component.
FIG. 5 is a graph of response signal data versus signal amplitude.
FIG. 6 is a graph of response signal data versus signal amplitude, illustrating a shift in response signal data.

### DETAILED DESCRIPTION

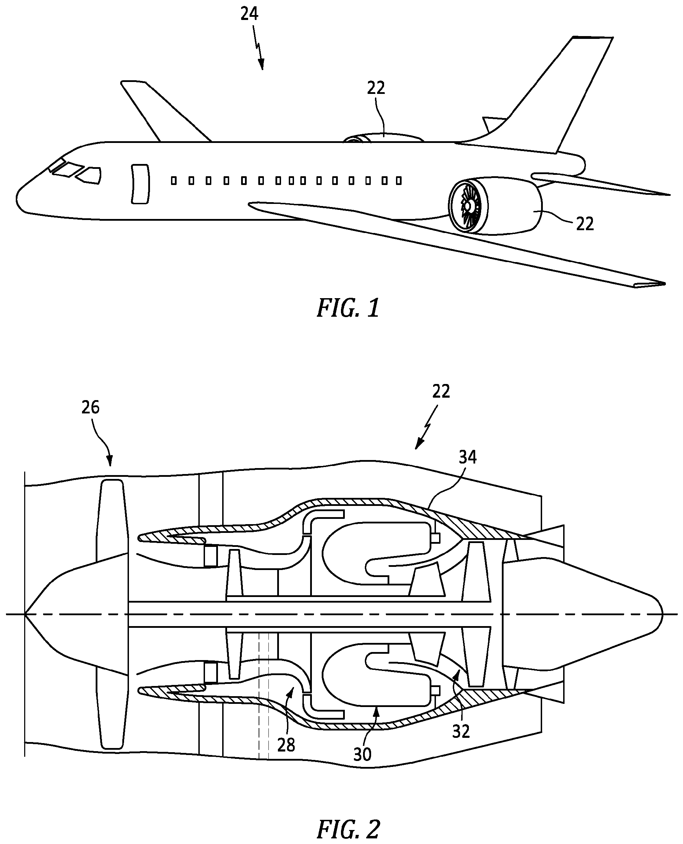

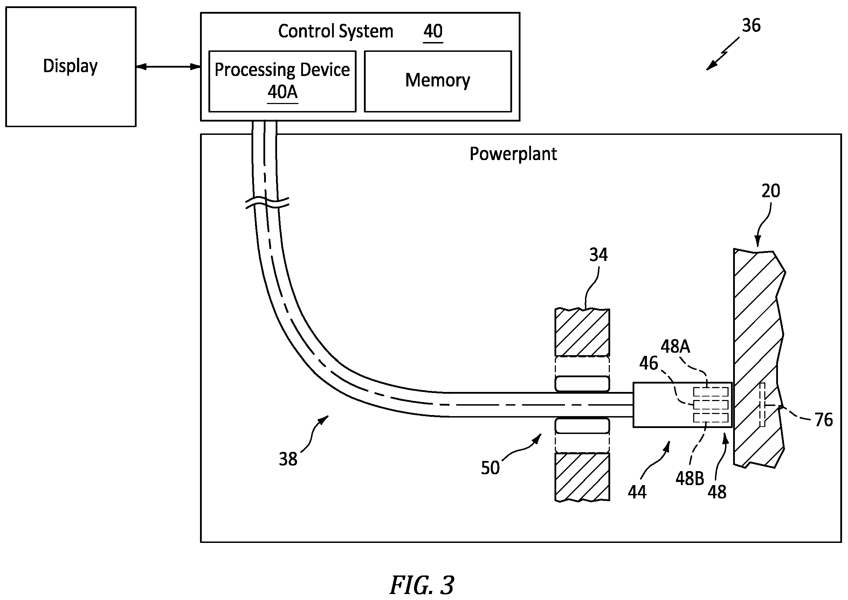

The present disclosure is directed to an inspection system for non-destructive inspecting a component 20 (e.g., see FIG. 3) of a powerplant 22 for an aircraft 22. The aircraft 22 may be an airplane, a helicopter, a drone (e.g., an unmanned aerial vehicle (UAV)) or any other manned or unmanned aerial vehicle. FIG. 1 illustrates an aircraft 24 in the form of an airplane having a pair of powerplants 22. The aircraft powerplant 22 may be configured as, or otherwise included as part of, a propulsion system for the aircraft 24. The aircraft powerplant 22, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. FIG. 2 diagrammatically illustrates a powerplant 22 in the form of a turbofan gas turbine engine having a fan section 26, a compressor section 28, a combustor section 30, a turbine section 32, and an engine casing 34. The aircraft powerplant 22 may alternatively be configured as, or otherwise included as part of, a power generation system for the aircraft. The aircraft powerplant, for example, may be an auxiliary power unit (APU) or any other type of gas turbine engine configured to mechanically power operation of an electrical generator. The present disclosure, however, is not limited to such exemplary aircraft powerplants. Aspects of the present disclosure, for example, may also be used for inspecting components 20 of other types of internal combustion engines and/or components 20 of various other types of power units; e.g., an electric machine, a hybrid-electric power unit, etc.

The inspection system 36 is configured to facilitate inspection of the powerplant component 20 while that powerplant component 20 remains installed within the aircraft powerplant 22 (e.g., see FIG. 2) and, for example, while the aircraft powerplant 22 remains substantially or completely assembled. FIG. 3 diagrammatically illustrates an inspection system 36 engaged with a powerplant component 20 (e.g., a rotor disk of a rotor stage) disposed within an interior region (e.g., an interior region defined by an engine casing 34, or the like) of the aircraft powerplant 22. The inspection system 36 is also configured to facilitate inspection of the powerplant component 20 while the aircraft powerplant 22 remains onboard the aircraft; e.g., remains installed on wing, on fuselage, in airframe, or the like. The inspection of the powerplant component 20 may be performed using the inspection system 36 while the aircraft 24 is outside of an aircraft hangar (e.g., on the tarmac at an airport between aircraft flights), and/or at a dedicated inspection and/or repair facility. The inspection of the powerplant component 20 may thereby be performed with a relatively short aircraft downtime and/or a relatively minimal expense. The inspection system 36, of course, may also be used for inspecting the powerplant component 20 installed with the aircraft powerplant 22 when that aircraft powerplant 22 is not installed with the aircraft 24 (e.g., prior to installation with the aircraft 24 or following removal from the aircraft 24) and/or when the aircraft powerplant 22 is partially disassembled into one or more sub-assemblies.

The powerplant component 20 to be inspected may be any metallic component 20 within the aircraft powerplant 22. The present disclosure provides considerable utility, for example, in the inspection of rotor disks (e.g., a rotor disk within a turbine rotor stage, or a compressor rotor stage, or the like) within a gas turbine engine. To facilitate the description herein, the present disclosure will be described in terms of inspecting a component 20 in the form of a gas turbine engine rotor disk. To be clear, the present disclosure inspection system 36 is not limited to inspecting rotor disks.

Aspects of the present disclosure include an inspection system 36 that includes an electronic inspection scope 38 (e.g., a borescope) and a control system 40. The non-limiting example of an inspection scope 38 shown in FIG. 3 includes a scope body 42, a scope head 44, a scope positional sensor 46, and a transducer 48. This example of an inspection scope 38 may also include structure for positionally fixing at least a part of the inspection scope 38; e.g., an expandable mount 50. In FIG. 3, the expandable mount 50 is diagrammatically shown in a stowed arrangement by a solid line and in a deployed arrangement by the dashed line. The expandable mount 50 is diagrammatically shown engaged with a component structure; e.g., engine casing 34, a panel, wall, or the like. The expandable mount 50 may also be configured to bias the scope head 44 against a surface of a component 36 (e.g., a rotor disk) with a selective amount of preload force. The preload force facilitates the operation of a transducer 48 such as a piezoelectric actuator that produces and receives ultrasonic signals, maintaining physical contact between the transducer 48 and the component 20 during operation. The amount of transducer preload may be in the range of about one and one-half pounds to about four and one-half pounds (1.5 - 4.5 lbs.; 0.7 - 2.0 kg), but the present disclosure may be configured for more or less preload force.

The scope body 42 extends longitudinally along a longitudinal centerline and may be configured as a flexible body. The scope body 42 may include one or more internal actuators for manipulating the scope body 42 to aid in maneuvering the scope head 44 within the interior of the aircraft powerplant 22 to the component 36. The scope positional sensor 46 and the transducer 48 may be arranged with (e.g., mounted to and/or disposed in) the scope head 44. The scope positional sensor 46 (e.g., a camera, a proximity sensor, or the like) may be configured to aid in the maneuvering of the scope head 44 and, more particularly, maneuvering of the transducer 48 towards the component 36 to be inspected; e.g., a rotor disk. The transducer 48 includes a signal transmitter 48A and a signal receiver 48B. In some embodiments, the transducer 48 includes a signal transmitter 48A that is independent of the signal receiver 48B. In some embodiments, the transducer 48 may be configured as a single device that functions as both a transmitter and a receiver. To facilitate the description herein, the transducer 48 will be described as having a signal transmitter 48A that is independent of the signal receiver 48B, but the present disclosure is not limited thereto.

The signal transmitter 48A is configured to emit an excitation signal into the component 20 to be inspected; e.g., a rotor disk. A non-limiting example of a signal transmitter 48A that may be used is piezoelectric ultrasonic actuator that produces an ultrasonic excitation signal that may be transmitted into the component 20. The present disclosure is not limited to using a piezoelectric ultrasonic actuator, and in those embodiments that use a piezoelectric ultrasonic actuator, the present disclosure is not limited to any particular piezoelectric ultrasonic actuator configuration. An example of a piezoelectric ultrasonic actuator that may be used is a piezoelectric stack; sometimes referred to as a "PZT stack". Ultrasonic excitation signals may be in the range of 30-500kHz. In some embodiments, the excitation signals may be produced in particular frequency ranges; e.g., a five kilohertz (5 kHz) range, a ten kilohertz (10 kHz) range, a twenty kilohertz (20 kHz) range, or the like. The present disclosure is not limited to excitation signals in any particular frequency range. As will be detailed in further detail herein, the signal transmitter 48A is in communication with the control system 40 for controlling the operation of the signal transmitter 48A.

The signal receiver 48B is configured to sense a signal within the component 20 (e.g., a rotor disk) that is produced in response to the emitted excitation signal and to produce a transducer response signal representative of the sensed signal. As will be detailed in further detail herein, the signal receiver 48B is in communication with the control system 40; e.g., response signals produced by the signal receiver 48B are provided to control system 40 for processing.

The above described inspection scope 38 is an example of an inspection scope 38 that may be used with the present disclosure but is not limited thereto.

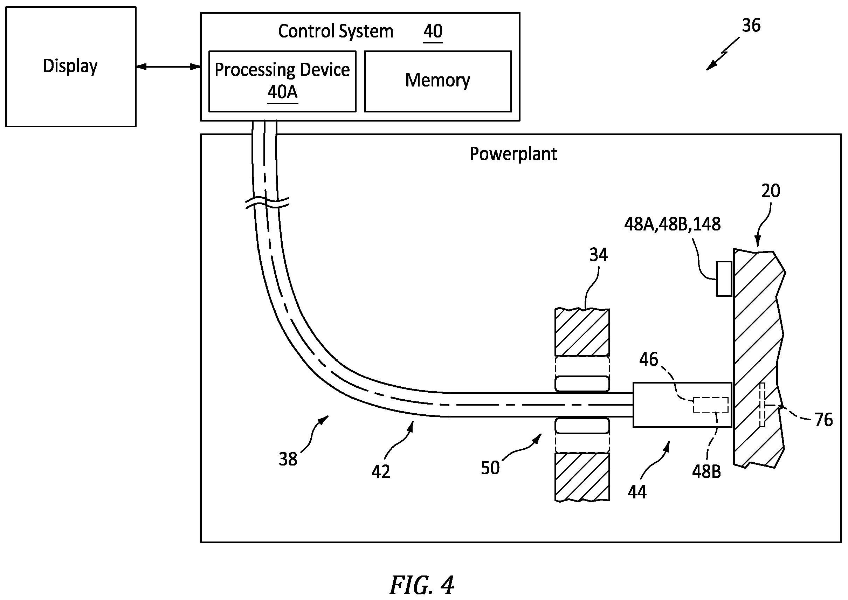

In some embodiments, the inspection scope 38 may be configured for use with an inspection mechanism that uses a transducer module 148 (which may be referred to as a "patch") that is remote from the inspection scope 38; e.g., see FIG. 4. For example, in some embodiments, a transducer module 148 may be configured for attachment to a component 20 (e.g., a rotor disk) and configured for remote activation via a signal; e.g., an electronic signal provided by the inspection scope 38. In this embodiment, the transducer module 148 may be configured to receive an activation signal (from the inspection scope 38) that switches the transducer module 148 from an "off configuration" to an "on configuration". In the on configuration, a signal transmitter 48A (e.g., a piezoelectric ultrasonic actuator, or other signal generator) is activated to produce excitation signals. In some embodiments, the signal transmitter 48A may be configured to produce excitation signals relating to multiple modes of excitation; e.g., as a result of control signals received from the inspection scope. Response signals resulting from applied excitation signals may be received by the transducer module 148 and those response signals (or other signals representative of the response signals) may be passed from the transducer module 148 to the inspection scope sensor head 44, or alternatively, the inspection scope sensor head 44 may directly receive the response signals; FIG. 4 illustrates a signal receiver 48B disposed within the transducer module 148 shown with a solid reference number line, and a signal receiver 48B disposed within the sensor head 44 by dashed line to indicate the alternate configuration. In a system like this (or similar system), the inspection scope 38 may not require a preload force (or only require minimal preload force) applying the inspection scope sensor head 44 against the component 20. Hence, in some inspection scope 38 embodiments the sensor head 44 may be configured to produce and detect signals without the need for preload, and may not directly produce the excitation signals used in the inspection.

The above described inspection scope 38 embodiments are provided to illustrate examples of inspection scopes 38 that may be used in the present disclosure and the present disclosure is not limited thereto.

The control system 40 includes a signal processing device 40A (referred to herein as a "controller 40A") that is in communication with other inspection system components such as the signal transmitter 48A and the signal receiver 48B; e.g., to control the operation of the respective inspection system component and/or to receive signals from and/or transmit signals to that inspection system component to perform the functions described herein. The controller 40A may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the inspection system 36 to accomplish the same algorithmically and/or coordination of system components. The controller 40A includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 40A may include, or may be in communication with, an input device (not shown) that enables a user to enter data and/or instructions, and may include, or be in communication with an output device configured, for example to display information (e.g., a visual display as shown in FIG. 3, or a printer, or the like), or to transfer data, etc. Communications between the controller 40A and other inspection system components may be via a hardwire connection or via a wireless connection.

The control system 40 may include other components (e.g., signal processing hardware such as amplifiers, filters, analog to digital converters, or the like) in addition to or as an alternative to the components described herein.

The transducer response signals may be processed to evaluate physical characteristics of a component 20. For example, individual frequency peaks of the transducer response signals may be evaluated in terms of a univariate Gaussian distribution. When the signal peak differs significantly from an expected peak configuration (e.g., an outlier signal peak), the signal peak may be interpreted as being indicative of a defect or an undesirable anomaly (diagrammatically shown in FIG. 3 as defect 76) present within the component 20. The evaluation of the individual frequency peaks may involve a comparative analysis between the collected transducer response signals and empirical data collected from a plurality of different components 20 of the same type. Although this type of comparative analysis is useful, it also has some inherent disadvantages. As an example, a comparative analysis based on empirical data collected from a plurality of different components 20 requires collection of that empirical data, which may or may not be possible, and even if possible may not be available; e.g., early in the life of a new component 20 the empirical data may not be available. As another example, even the "same" components 20 will have component to component variations (i.e., no two components 20 are exactly alike in every respect) and those component to component variations will produce variations in response signals despite the fact that the components 20 may be free of defects. The component to component response signal variation can obscure response signal portions that are attributable to defects. The present disclosure provides a methodology that provides an improved inspection methodology that eliminates component to component variation and thereby facilitates the identification of defects in the component 20; i.e., the presence or absence of a defect in the component 20.

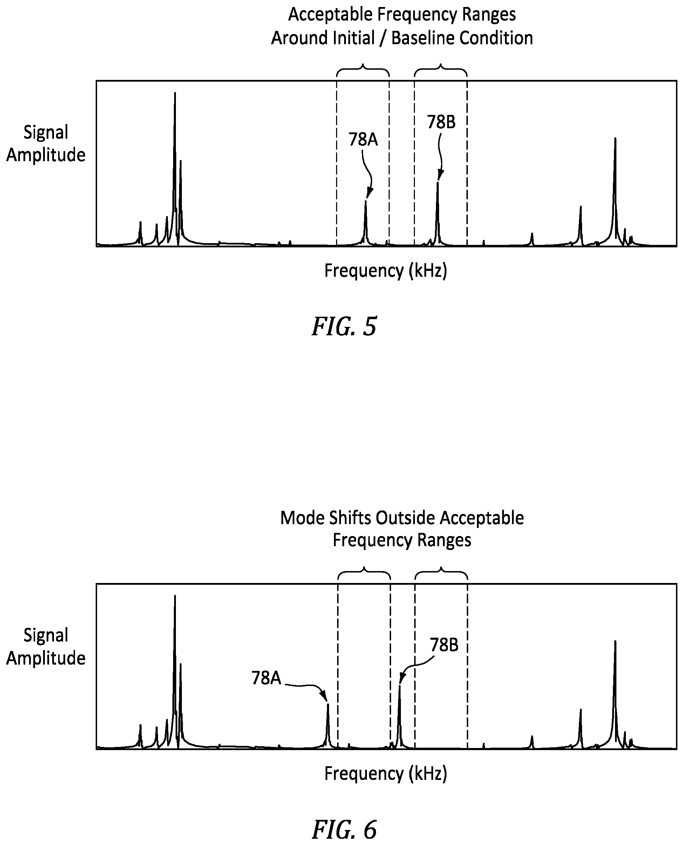

Within the present methodology, a component 20 (e.g., a rotor disk) that has been inspected and found to be free of defects may be inspected using a present disclosure inspection system 36. The component 20 may be any component (new, used, refurbished, or the like) provided it has been inspected and determined to be free of defects. The inspection of the component 20 produces response signal data that is used as a baseline response for that specific component 20. The baseline response signal data for that component 20 will be unique to that component 20 and may be referred to as a "digital twin". Under the present disclosure, subsequent inspections of that component 20 may be performed using the inspection system 36 to produce "inspection response signal data" based on the response signal data from that inspection. Hence, the baseline response signal data and the inspection response signal data are both unique to that specific component 20. The inspection response signal data may be compared to the baseline response signal data to identify changes therebetween. Some types and/or amount of changes between the inspection response signal data and the baseline response signal data are to be expected as a function of component 20 usage and/or wear. FIG. 5 is a response signal data graph of frequency versus signal amplitude for a specific component 20. The graph diagrammatically illustrates two signal peaks (a first peak 78A and a second peak 78B) within a frequency range of inspection response signal data. FIG. 5 illustrates acceptable frequency range boundaries for each frequency peak 78A, 78B; e.g., a lower acceptable boundary and a higher acceptable boundary for each frequency peak 78A, 78B. The acceptable lower and higher frequency peak boundaries may be based on the baseline response signal data, as well as other factors. FIG. 6 is also a response signal data graph of frequency versus signal amplitude for the specific component 20. The graph diagrammatically illustrates the same two signal frequency peaks 78A, 78B shown in FIG. 5 within a frequency range of inspection response signal data. In FIG. 6, however, it can be seen that the signal peaks 78A, 78B have shifted to the left (i.e., decreased in frequency) and are now both outside of the respective acceptable frequency range boundaries. The mode shift of the signal peaks 78A, 78B to decreased frequencies are indicative of a change in the physical properties of the component 20. The shift in signal data may or may not be indicative of a defect, but they are indicative of a change in the physical properties of the component 20. The present disclosure may use the identification of the signal differences to flag a technician to the possible presence of a defect.

It can be seen from this example that the present disclosure provides a system and inspection method that can be performed in almost any environment and in the case of an aircraft engine application does not require the engine to be removed from the wing of the aircraft. The present disclosure system and inspection method can be performed after a trigger event (e.g., an engine performance anomaly) that occurs during engine operation and/or can be performed periodically as part of a maintenance program; e.g., a maintenance program based on aircraft flight cycles - takeoff, cruise, and landing. The inspection data collected with each inspection (i.e., after an event and/or during a periodic inspection) can be tracked to monitor the useful life of the component 20. This is in contrast to methodologies that require inspection strictly after some number of engine operational hours, or flight cycles, or the like (i.e., "milestone inspections") with no inspection data collected in between. The ease of collecting data under the present disclosure system and method allows for data to be quickly and efficiently collected more often, without the need for engine removal from the aircraft. Hence, the present disclosure system and inspection methodology may be used as a replacement for conventional milestone inspections or in coordination with conventional milestone inspections. The inspection data collected with each inspection under the present disclosure system and inspection methodology may also be used for predicting the useful life of components 20. Component useful life data in an aircraft powerplant application can be tremendously useful in managing aircraft fleets and avoidance of safety issues. In addition, the present disclosure can provide component inspection data almost on a real-time basis (e.g., it does not require a body of empirical data collected from a plurality of different components) and mitigates or may avoid component to component variability that could otherwise obscure inspection data. In some embodiments, component 20 inspection data collected periodically can be evaluated to determine trend data that can be used to predict the useful life of a component 20.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A method of inspecting a component (20) within a gas turbine engine (22), wherein the component (20) comprises a solid metallic material, the method comprising:
(a) providing a baseline inspection response signal that is produced by using a transducer (48) to perform an initial inspection of the component (20), the initial inspection including transmitting a first initial signal into the component (20) and sensing the component (20) for a second initial signal produced as a result of the first initial signal being transmitted into the component (20), wherein the baseline inspection response signal is representative of the second initial signal and is unique to the component (20);
(b) using the transducer (48) to inspect the component (20), the inspection including transmitting a first signal into the component (20) and sensing the component (20) for a second signal produced as a result of the first signal being transmitted into the component (20), and producing an inspection response signal representative of the second signal; and
(c) evaluating the inspection response signal to determine the presence or absence of a defect using the baseline response signal.

2. The method of claim 1, wherein the inspection response signal is evaluated to determine a difference with the baseline response signal.

3. The method of claim 2, wherein the inspection response signal is evaluated by comparison with the baseline response signal, and optionally wherein the inspection response signal is evaluated by comparison with the baseline response signal to determine a frequency shift of one or more signal peaks.

4. The method of claim 1, 2 or 3, wherein the first signal and the second signal are ultrasonic signals.

5. The method of any preceding claim, wherein the baseline response signal is indicative of the component (20) being free of defects.

6. The method of any preceding claim, wherein the component (20) is a rotor disk.

7. The method of any preceding claim, further comprising repeating steps (b) and (c) after a trigger event that occurs during operation of the gas turbine engine (22).

8. The method of any preceding claim, further comprising repeating steps (b) and (c) periodically, and optionally determining trend data using a plurality of the inspection response signal produced periodically.

9. The method of claim, further comprising repeating steps (b) and (c) after the gas turbine engine (22) has performed a predetermined number of flight cycles.

10. The method of any preceding claim, wherein the transducer (48) is attached to the component (20), and an inspection scope (38) in contact with the component (20) and independent of the transducer (48) is used to communicate with the transducer (48).

11. An inspection system (36) for a component (20) within a gas turbine engine (22), the component (20) comprising a solid metallic material, the system (36) comprising:
a transducer (48) having a signal transmitter (48A) and a signal receiver (48B); and
a controller (40A) in communication with the signal transmitter (48A), the signal receiver (48B), and a non-transitory memory storing instructions, which instructions when executed cause the controller (40A) to:
(a) control the signal transmitter (48A) to transmit a first signal into the component (20) comprising the solid metallic material;
(b) control the signal receiver (48B) to sense the component (20) for a second signal produced as a result of the first signal being transmitted into the component (20), and to produce a response signal;
(c) process the response signal received from the signal receiver (48B) to produce an inspection response signal; and
(d) evaluate the inspection response signal to determine the presence or absence of a defect (76), using a stored baseline response signal unique to the component (20) produced by using the transducer (48) to perform an initial inspection of the component (20) by transmitting an initial first signal into the component (20) and sense the component (20) for an initial second signal produced as a result of the initial first signal being transmitted into the component (20), and produce the baseline response signal unique to the component (20) using the initial second signal.

12. The inspection system of claim 11, wherein the instructions when executed cause the controller (40A) to evaluate the inspection response signal by determining a difference with the baseline response signal, optionally wherein the instructions when executed cause the controller (40A) to evaluate the inspection response signal by comparison with the baseline response signal.

13. The inspection system of claim 11 or 12, wherein the first signal and the second signal are ultrasonic signals.

14. The inspection system of claim 11, 12 or 13, wherein the instructions when executed cause the controller (40A) to perform (a) - (d) after a trigger event that occurs during operation of the gas turbine engine (22), and/or wherein the instructions when executed cause the controller (40A) to perform (a) - (d) after the gas turbine engine (22) has performed a predetermined number of flight cycles.

15. The inspection system of any of claims 11 to 14, wherein the instructions when executed cause the controller (40A) to perform (a) - (d) periodically, and optionally wherein the instructions when executed cause the controller (40A) to determine trend data using a plurality of the inspection response signal produced periodically.
